# EUROPEAN PATENT SPECIFICATION

(11) **EP 4 282 027 B1**
(45) Date of publication and mention of the grant of the patent: **09.12.2026**
(21) Application number: 22704623.2
(22) Date of filing: 19.01.2022
(51) Int. Cl.: H01Q 1/32, H01Q 1/36, H01Q 13/10, H01Q 15/14, H01Q 21/06, H01Q 1/12, H01Q 15/00, B60R 1/02

(54) **MULTI-BAND ANTENNA**
MEHRBANDANTENNE
ANTENNE MULTIBANDE

(30) Priority: 19.01.2021 US 202163139189 P
(43) Date of publication of application: 29.11.2023
(73) Proprietor: Tesla, Inc., Austin, TX 78725 (US)
(72) Inventor: KONANUR, Anand S., Austin, Texas 78725 (US); SINGH, Shreya, Austin, Texas 78725 (US); BREDEN, Richard, Austin, Texas 78725 (US); HORIKI, Yasutaka, Austin, Texas 78725 (US); ERENTOK, Aycan, Austin, Texas 78725 (US); ZUCKER, George, Austin, Texas 78725 (US); BHAT, Nagarjun, Austin, Texas 78725 (US); MOREIRA, Rui, Austin, Texas 78725 (US); NABOVATI, Aydin, Austin, Texas 78725 (US); BHANDARI, Rishabh, Austin, Texas 78725 (US); ROTHSCHILD, Austin, Austin, TX 78725 (US); YOO, Jae Hoon, Austin, TX 78725 (US); LE TOUMELIN, Loic, Austin, TX 78725 (US)
(74) Representative: Liesegang, Eva
(86) International application number: PCT/US2022/012965
(87) International publication number: WO 2022/159481

(56) References cited:
- US-A1- 2002 011 965
- US-A1- 2007 018 899
- US-A1- 2010 026 590
- SHEPOV VLADIMIR N ET AL: "Few-element active antenna arrays for high-accuracy anti-jamming GLONASS/GPS receivers", 2015 12TH INTERNATIONAL CONFERENCE ON TELECOMMUNICATION IN MODERN SATELLITE, CABLE AND BROADCASTING SERVICES (TELSIKS), IEEE, 14 October 2015 (2015-10-14), pages 176 - 179, XP032832916, ISBN: 978-1-4673-7515-3, [retrieved on 20151214], DOI: 10.1109/TELSKS.2015.7357763

## Description

### BACKGROUND

### Technical Field

Embodiments of this disclosure relate to antennas and antenna systems.

### Description of Related Art

Global Navigation Satellite System (GNSS) technology involves antennas that can receive signals from satellites in the earth's atmosphere. GNSS antenna systems can be useful for providing Global Positioning System (GPS) signals and/or other signals in a variety of contexts. GNSS antennas can receive signals at multiple frequencies when there is a desire to enhance positional accuracy. Multi-band signal reception can present technical challenges associated with configuring the antenna for receiving signals at more than one band. GNSS antennas can function more effectively when they are free from occlusions.
The document "Few-element active antenna arrays for high-accuracy anti-jamming GLONASS/GPS receivers" by V. N. Shepov et al., 2015 12th Int. Conf. on Telecommunication in Modern Satellite, Cable and Broadcasting Services (TELSIKS), Nis, Serbia, 2015, pp. 176-179, describes tri-band (L1/L2/L3) few-element antenna arrays for high-accuracy anti-jamming GLONASS/GPS receivers. The antenna arrays consist of active slot stripline leaky wave right-hand circular polarization antennas.
US 2007/018899 A1 describes an antenna for acquiring RF signals from various satellite ranging systems including GPS, GLONASS, GALILEO and OmniSTAR(R). The antenna configuration includes a radiating structure of multi-arm spiral slots terminated with fractal loops. A leaky wave microstrip spiral feed network is used to excite the radiating structure of the antenna. The fixed beam phased array of aperture coupled slots is optimized to receive a right hand polarized signal. The proposed antenna is made out of a single PCB board. The antenna has a uniform phase and amplitude pattern in the azimuth plane from 1.15 to 1.65 GHz, therefore providing consistent performance at GPS, GLONASS, GALILEO and OmniSTAR(R) frequencies. The antenna also has a common phase center at the various frequencies from 1175 MHz to 1610 MHz and substantially the same radiation pattern and axial ratio characteristics.
US 2002/011965 A1 describes a slot-array antenna, which includes a nonconductive substantially planar substrate and a transmission line disposed on a rear substrate surface where one end of the transmission line is connected to an amplifier, a connector, or an impedance load. A conductive layer on the front substrate surface includes a plurality of slotted openings arrayed about an antenna axis. A surface-wave suppression region encloses the array of slotted openings and a plurality of peripheral openings are disposed between the surface-wave suppression region and the peripheral edge of the antenna.
US 2010/026590 A1 describes a multi-band antenna, especially a fractal antenna. The multi-band behavior is obtained by a set of geometry patterns of the same basic elements. The materials of the antenna may be formed by a chemical solution or a sputtering vacuum deposition process. An additional passivation layer can be added to protect the conducting layer of the antenna. Materials for this passivation layer are made of oxide, or any other polymeric material, polymer, or resin coating on the structure.

The invention is set out in the independent claim. Preferred embodiments are defined by the dependent claims.

### BRIEF DESCRIPTION OF THE DRAWINGS

Various features will now be described with reference to the following drawings. Throughout the drawings, reference numbers may be re-used to indicate correspondence between referenced elements. The drawings are provided to illustrate examples described herein.
FIGS. 1A and 1B depict an illustrative antenna system according to one or more aspects of the present application;
FIGS. 2A and 2B are charts illustrative of comparing antenna gain performance of two ports of antennas according to one or more aspects of the present application;
FIGS. 3A - 3C depict an illustrative antenna system according to one or more aspects of the present application;
FIGS. 4A and 4B depict an illustrative antenna system according to one or more aspects of the present application;
FIG. 5 depict an illustrative antenna system according to one or more aspects of the present application;
FIGS. 6A and 6B depict an illustrative antenna system embedded in vehicle equipment according to one or more aspects of the present application;
FIG. 7 depicts an illustrative antenna system and heating system according to one or more aspects of the present application;
FIGS. 8A - 8F depict an illustrative antenna system in combination with heating elements according to one or more aspects of the present application;
FIG. 9 depicts an illustrative antenna system and heating system according to one or more aspects of the present application;
FIG 10 depicts an illustrative antenna system and heating system according to one or more aspects of the present application; and
FIG 11 depicts an illustrative antenna system according to one or more aspects of the present application;

### DETAILED DESCRIPTION OF EMBODIMENTS

The following description of certain embodiments presents various descriptions of specific embodiments. However, the innovations described herein can be embodied in a multitude of different ways, for example, as defined and covered by the claims. In this description, reference is made to the drawings where like reference numerals can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing.

Global Navigation Satellite System (GNSS) technology involves antennas that can receive signals from satellites in the earth's atmosphere. GNSS system antennas benefit from reception of signals at multiple frequencies when there is a desire to enhance positional accuracy. GNSS antennas that can receive satellite signals from L1 (1559 MHz to 1610 MHz), L2 (1215 MHz to 1254 MHz), and L5 (1164 MHz to 1214 MHz) bands provide the ability to perform in situ corrections for atmospheric errors. In addition, GNSS antennas enable ambiguity resolution in carrier phase based GNSS algorithms, enabling enhanced standalone performance. Multi-band antenna accuracy remains higher than single frequency solutions when both are provided with the same quality corrections. Such antennas also help in rejecting multipath signals that tend to deteriorate single band antenna performance.

GNSS antenna systems can be useful for providing Global Positioning System (GPS) signals and/or other signals to vehicle systems for different functions involving accurate location information. For example, signals received from a GNSS antenna can be combined with data from other sensors (e.g., ultrasonic sensors and/or cameras) to plan a route to take a vehicle to a target location, such as summoning the vehicle to the owner or another person. GNSS antenna systems can also be useful for other features that involve precise or general location information such as navigation, autopilot and other self-driving features, searching for nearby gas stations, restaurants, or businesses. GNSS antenna systems can also be useful for relaying precise or general location information for relaying pertinent information regarding the region and local advertisements.

Certain multi-band GNSS antennas have involved using stacked patch antennas or helix antennas. Such multi-band antennas can have complex feed structures designed to enhance Right Hand Circular Polarized Gain and suppress Left Hand Circular Polarized Gain to thereby improve performance. Such multi-band antennas tend to be thick in size or limited to a narrower band, which can cause a degradation in performance. These features of certain multi-band antennas can diminish the desirability of such multi-band antennas for automotive usage where antennas are integrated within the envelope of the vehicle surface.

Aspects of this disclosure relate to multi-band antenna systems, such as system including GNSS antennas. The antenna can be illustratively designed for use or integrated in a vehicle. Such an antenna can include a plurality of slots and a plurality of spiral feeds. The slots and the spiral feeds can be on opposing sides of a circuit board or other substrate. The antenna includes a reflector to reflect antenna radiation to an upper hemisphere. The reflector can be spaced apart from the circuit board by less than a quarter wavelength, and the reflector can reflect radiation in phase. In certain instances, a thickness of the antenna system can be 15 millimeters or less. The antenna can be embedded into the same surface as the reflector. This reflector can increase antenna gain while enabling the antenna to be relatively thin. The reflector can be an artificial magnetic ground plane in certain embodiments. The reflector can be a metallized surface of a vehicle (e.g., an interior surface visible to a vehicle occupant) in some other embodiments. The antenna can be included in an active antenna system that also includes a low noise amplifier. The antenna can be included in a housing that also includes other circuit elements. Different spiral feeds of the antenna can be connected to different respective ports of a diplexer that is coupled between the antenna and the low noise amplifier.

Aspects of this disclosure relate to an antenna system with integrated heating. The antenna system can maintain antenna functionality under adverse weather conditions, such as when there is snow and/or ice on a surface over the antenna. The antenna system can be designed for a vehicle. The antenna system can include a multi-band antenna, such as a GNSS antenna. The antenna system can be placed under and embedded within a glass exterior surface of a vehicle. Such an antenna system can include a capacitively coupled metallic element on or adjacent to the glass exterior surface, which can serve as both a parasitic element to enhance gain and as a heating element to melt snow and/or ice accumulation over the glass area that covers the antenna. In certain applications, the antenna's structure itself can be used as a heater to improve performance in adverse weather conditions while the heating elements are positioned away from the thermally sensitive electronics. The antenna system with integrated heating can include a spiral antenna with any suitable combination of features disclosed herein. In some other applications, different antennas can be used with integrated heating to remove snow and/or ice from a vehicle surface.

Example embodiments of antennas will now be discussed. Any suitable principles and advantages of these antennas can be combined with each other as suitable.

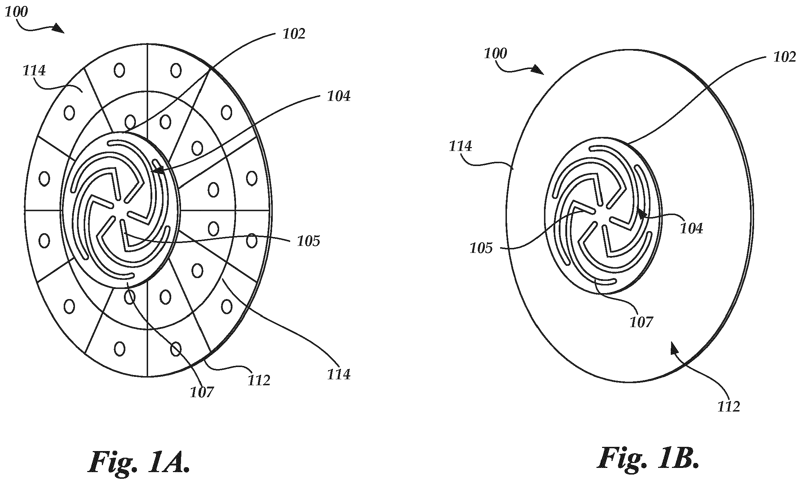

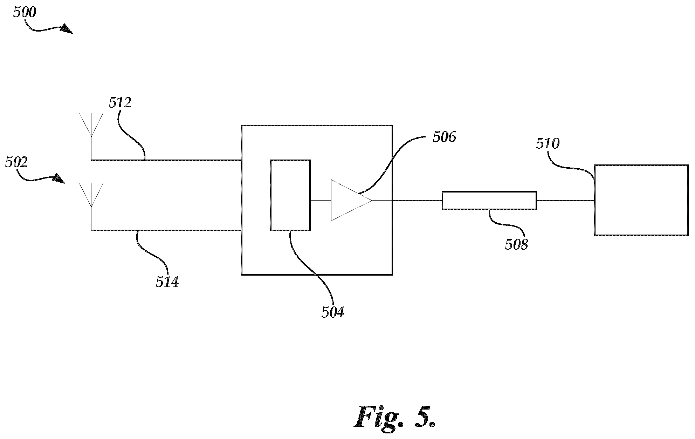

FIG. 1A illustrates an embodiment of an antenna system 100. The antenna system 100 can include an antenna component embodied as a printed circuit board (PCB) 102 that includes plurality of slots 104 for receiving radio signals. Illustratively, the plurality of slots can include a variety of slots, illustratively illustrated as a set of 6 or more slots. The slots 104 can be etched into the top layer of the PCB 102 to form the antenna component of the antenna system 100. Illustratively, the PCB 102 can include a top layer 106 and a bottom layer 108. The plurality of slots 104 (e.g., antenna slots) can spiral around the top layer or top surface of the PCB 102. Illustratively, each individual slot can include a first portion 105 that are configured to be placed on the first surface 106 in an equidistant manner. Individual slots can further include a second portion 107 that organized to radially spiral around a center portion of the antenna component 102 (e.g., the center of the PCB). The bottom layer 108 of the PCB (not shown) may include a pair of spiral feeds 110 arranged to connect to the slots 104 on the top layer of the PCB 102. The two spiral feeds 110 on the bottom layer of the PCB 102 can maintain the symmetry of the design. Illustratively, embodiments of a symmetrical design of the spiral feeds 110 allows each of the spiral feeds 110 to be fed separately, creating a two-feed antenna system 100. This allows for a low noise amplifier topology with fewer parts, thus reducing cost of the overall system. An example of a system with such a low noise amplifier will be discussed with reference to FIG. 5. The antenna slots 104, PCB 102, and antenna feeds 110 can together have an overall thickness in a range from about 0.5 millimeters to about 3 millimeters in certain applications, including any value defined within the range.

In FIG. 1A, the antenna system 100 includes an Artificial Magnetic Conductor (AMC) 112 ground plane that serves as a reflector. An AMC can be a surface that reflects signals impinging on it. The AMC 112 can reflect signals in-phase with the source. By reflecting the signals in-phase with the source, the AMC 112 can be placed closer to the antenna than a quarter wavelength. The AMC 112 can enhance the gain of the signal by increasing the average upper hemisphere gain of a signal being received by the antenna. This increase in average upper hemisphere gain can be a result of reflecting energy from the AMC. In some embodiments, the AMC 112 may be omitted from the antenna system 110 in favor of other reflective surfaces.

As illustrated in FIG. 1A, the AMC 112 can include of a series of radially symmetric patches 114, each grounded to the solid copper layer below through a via. These radially symmetric patches can be designed to have an area that creates a band gap close to two different frequency bands, such as the L2/L5 bands. Accordingly, the surface of each radially symmetric patch can be excited so as to reflect the targeted frequencies and signals back in phase, increasing gain for that signal. This reflection can boost upper hemisphere gain. Other frequencies may not be reflected because the signal is propagated along the surface of each radially symmetric patch. The AMC 112 can also retain the radial symmetry of the overall antenna. FIG. 1B illustrates an antenna similar to the antenna of FIG. 1A, except that the antenna of FIG. 1B includes a metal disk in place of the AMC 112. The metal disk 114 can be referred to in some embodiments as a perfect electric conductor.

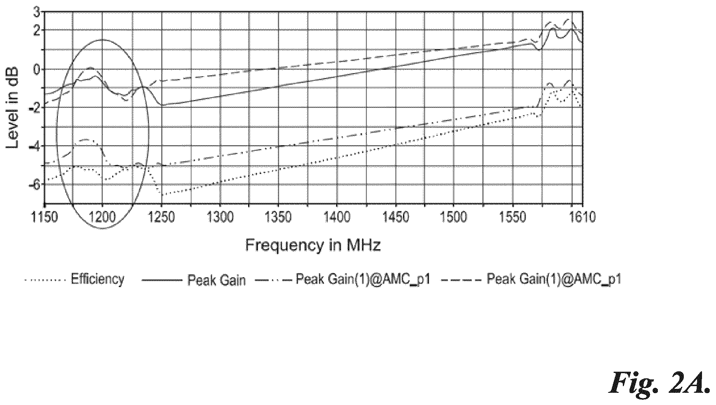

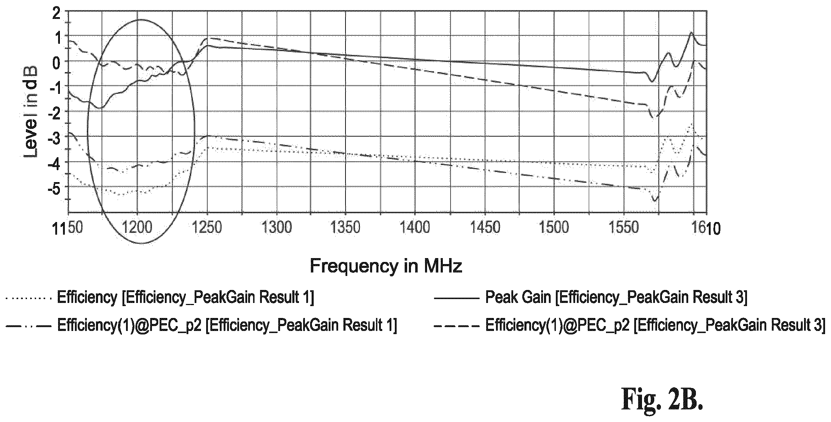

FIGS. 2A and 2B are graphs comparing antenna gain performance of two ports of antennas in FIGS. 1A and 1B, respectively. FIG. 2A indicates that the antenna of FIG. 1A has a second band of operation around 1.15 GHz to 1.25 GHz that is not achieved by the antenna of FIG. 1B as seen in the graph of FIG. 2B. The appearance of this second resonance band in a low-profile antenna can be attributed to the AMC as a surface that reflects signals incident on it with a zero-degree phase change. Accordingly, FIGS. 2A and 2B indicate that the antenna of FIG. 1A can have an additional band of operation relative to the antenna of FIG. 1B.

This multi-band antenna design is useful for receiving signals from a GNSS satellite. This multi-band antenna can include a simple feed structure designed to enhance Right Hand Circular Polarized Gain and suppress Left Hand Circular Polarized Gain to thereby improve performance. Accordingly, the antennas according to embodiments can maintain a low profile while operating on a relatively wide band of frequencies for high performance. Such an antenna can be used in a vehicle which has strict design criteria, such as the specification that the antenna be integrated within an envelope of the vehicle's exterior surface.

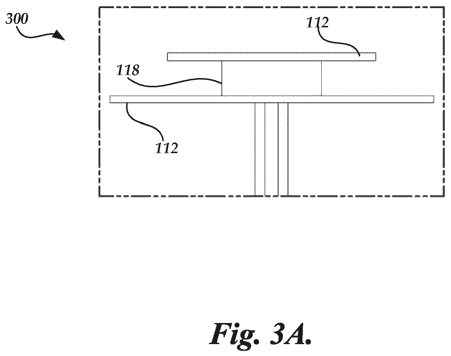

Reference to FIGS. 3A-3C includes reference to one or more of the components previously discussed with regard to FIG. 1A. FIG. 3A illustrates an embodiment of an antenna system 300 having specific configurations of illustrative components. A spacer 118 is placed between the antenna component 102 and the ground plane for separation 112. The spacer 118 may prevent and/or decrease the possibility of short-circuiting between the feeds of the antenna component 102 and the ground plane 112. The spacer can be 3D printed or made of any suitable insulating and/or non-conductive material.

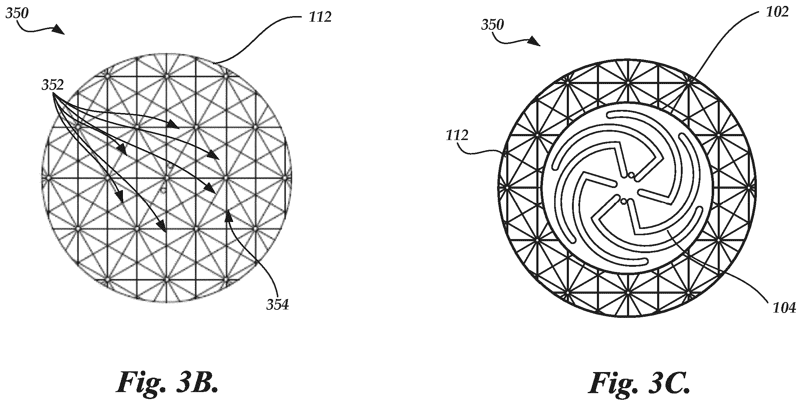

With reference to FIG. 3B, an embodiment includes an AMC surface 350 comprising hexagonal unit cells 352. FIG. 3B illustrates the edges of an individual hexagonal unit cell 352. The ground plane 112 in FIG. 3A can be the AMC surface 350 of FIG. 3B. These hexagonal cells 352 are segmented into triangular sub-cells 354. FIG. 3B illustrates a center of a single triangular sub-cell 354. The hexagonal cells 352 and triangular sub-cells 354 reflect the targeted frequencies and signals back in phase, increasing gain for that signal. The hexagonal cells 352and triangular sub-cells 354 can increase upper hemisphere gain by reflecting energy from the lower hemisphere. In some other embodiments, the triangular sub-cells 352 can correspond to identically shaped or substantially identically shaped, regular polygon cells can be used across the AMC surface 350for simple and precise analysis of antenna response.

In one embodiment, these sub-cells 354 maintain radial symmetry for each individual hexagonal unit cells 352. In another embodiment, these sub-cells 354 maintain radial symmetry for the overall surface of the AMC 350. In another embodiment, the area of each sub-cell 352 is determined by calculating the eigen modes supported by an infinitely large structure consisting of repeated polygonal units.

Fig. 3B depicts an embodiment of a hexagonal unit cell-based AMC 350 before mounting the dual band spiral antenna. FIG. 3C depicts an embodiment of an antenna system 370 including a hexagonal unit cell-based AMC after mounting the dual band spiral antenna component, such as the antenna component depicted in FIG. 1A. Specifically, FIG. 3C is an example top view of the antenna system of FIG. 3A. As previously described, the antenna component (e.g., the spiral slots or spiral antennas) can be separated from the AMC surfaces by a spacer 118 to prevent short-circuiting between the feed spirals on the bottom layer of the antenna component 102 and the cells 352 and/or sub-cells 354 on the top surface 350 of the AMC surface PCB .

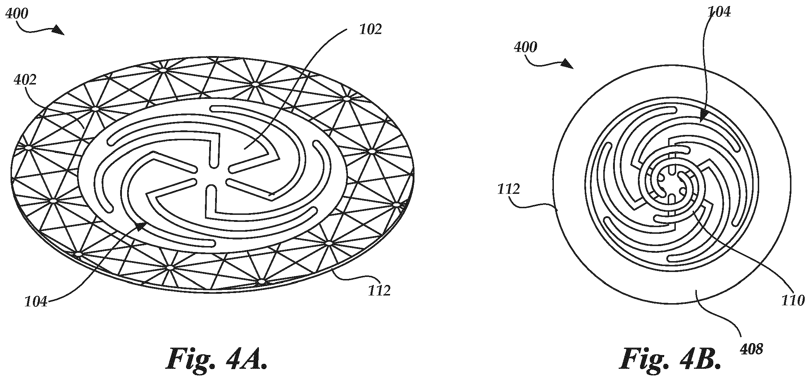

Reference to FIGS. 4A-4B includes reference to one or more of the components previously discussed with regard to FIG. 1A. With reference to Fig. 4A, in an embodiment of an antenna system 400, the antenna component 102 is embedded inside an AMC surface 402, such that the antenna system corresponds to a single layer (or substantially single layer). In this way, the AMC surface 402 frames the antenna component 102 (e.g., the spiral antenna). This can result in a low-profile design that is one PCB thick that maintains good multi-band performance for the antenna. The AMC surface 402 can function similar to as described above with regard to FIG. 3.

Fig 4B shows the bottom view 406 of an embodiment of an antenna system, such as the antenna system 400 of FIG. 4A. In this embodiment, a bottom PCB layer 406 can include the spiral feeds 408. As previously disclosed, the spiral feeds 408 can connect to the antenna component 102.

FIG. 5 illustrates a block diagram 500 of embodiments of an active antenna system, such as the various embodiments of an active antenna system illustrated in FIGS. 1-4. The antenna system 500 comprises an antenna 502, a diplexer 504, a low noise amplifier 506, a cable 508, and a receiver system 510. The antenna system 500 further includes a first feed 512 and a second feed 514. The first feed 512 and second feed 514 can be spiral feeds that connect illustratively to the antenna component 502. The system of FIG. 5 is an example system in which any suitable antenna component 502 disclosed herein can be implemented.

The first feed 512 and second feed 514 from the antenna provide signals to the low noise amplifier 506 via the diplexer 504. These GNSS signals may originate from satellites, other orbital platforms, or from terrestrial signal sources. Additionally, the GNSS system signals can be signals that originate from another source which are then relayed through satellites, other orbital platforms, or from terrestrial signals to the antenna. Having a first feed and a second feed allows for separate filtering of different frequency bands and/or rejecting multipath signals that tend to deteriorate single band antenna performance.

The first feed 512 and the second feed 514 are connected to different respective ports of the diplexer 504. The diplexer 504 provides separate filtering for different GNSS frequency bands. The diplexer 504 also combines filtered signals associated with GNSS frequency bands. These frequency bands can include L1, L2, or L5 bands. For example, in one embodiment, the first feed 512 can be tuned to the L1 frequency band while the second feed can be tuned to the L2 frequency band. In another embodiment, the second feed 514 can be tuned to the L5 band. Alternatively, the first feed 512 can be tuned to the L2 band. Tuning the feeds to different frequency bands can be used to reject multipath signals that typically deteriorate single band antenna performance. The L1 band may include the range of frequencies from 1559 MHz to 1610 MHz. The L2 band may include frequencies from 1215 MHz to 1254 MHz. The L5 band may include frequencies from 1164 MHz to 1214 MHz. In this way, the diplexer 504 can filter signals from the first feed 512 and the second feed 514 and can combine the signals at a single port that is electrically connected to the low noise amplifier 506.

The combined signal can then be amplified by a low noise amplifier to increase the gain of signals sent by the GNSS system to the antenna system. In some embodiments, there can be a second or multiple additional stages of the low noise amplifier. The system of FIG. 5 can be referred to as an active antenna system because it includes the antenna and the low noise amplifier. Once the gain of the signal has been increased and amplified, the amplified signal can then be output to a receiver system via the cable.

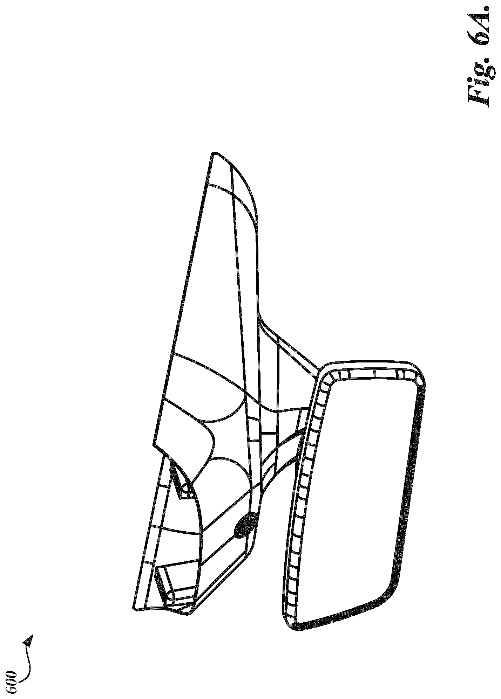

FIG. 6A illustrates an embodiment 600 where the reflector for an antenna system is an interior surface of a vehicle. In some vehicle designs, there may not be space available to integrate an antenna component (e.g., antenna component 102) and a separate ground plate (e.g., reflector 112) to reflect energy from the bottom hemisphere to the upper hemisphere. Similarly, in some vehicle designs there may not be space available to have a single PCB layer antenna framed by an AMC. In such vehicles, an interior surface (e.g., an interior plane) can serve as a reflector for the antenna. An interior surface can include any plane of material that is visible to the vehicle occupant or any plane that is located inside the vehicle in relation to an exterior of the vehicle. The AMC can coat an inner surface of a vehicle in certain applications. An existing surface of a vehicle can be used for multiple purposes such as an AMC or ground plane in addition to for a different purpose.

The interior surface is configured to be a reflector to provide increased gain for the antenna. For example, the interior surface could be metal or include a metallic material. Alternatively, the face of the interior surface directed toward the exterior of the vehicle, referred to hereafter as the interior face, can be metallized. The interior face could be a metallized plastic, another metallized material, or a combination of metal, metallic materials, metallized plastics, or other metallized materials. The interior face or metal interior surface can be shaped to reflect targeted signals to increase gain. The interior face or metal interior surface can include cells, sub-cells, or patches to reflect particular signals. In some embodiments, the interior face or metal interior surface can be positioned at one quarter wavelength of the targeted frequencies from the antenna to ensure that the targeted signals are reflect in phase. The interior surface or interior face does not have to be flat but can be curved or otherwise configured.

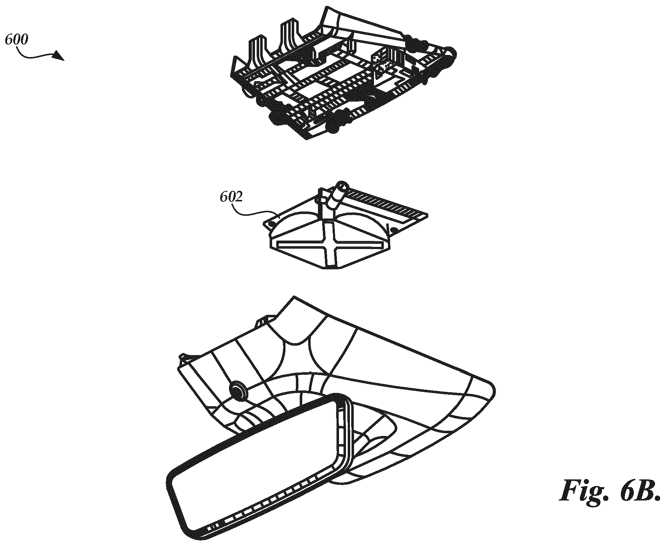

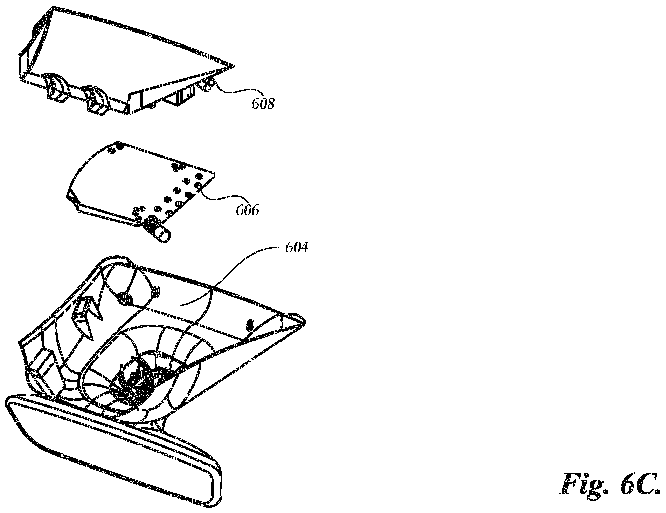

In some embodiments, the antenna system, which includes the antenna and reflector, can be located in an enclosure under the windshield of a vehicle such that the enclosure as seen in FIGS. 6B and 6C. As illustrated, the enclosure provides the interior face 604 as a reflector for the antenna 606. The interior face of a beauty cover can be metallized as shown in FIG. 6B. A bottom view of the antenna with the beauty cover 608 removed is shown in FIG. 6C.

Antenna systems in accordance with any suitable principles and advantages disclosed herein can be located in a variety of different positions of a vehicle. In some embodiments, the antenna system can be located in the rear-view mirror assembly of a vehicle as shown in FIGS 6A-6C. In some other embodiments, the antenna system could be in the rear header of a vehicle. In some other embodiments, the antenna system could be located in any surface around the frame of the vehicle. In various embodiments, the antenna system could be located in any surface of a vehicle that is metal or can be metallized.

Alternatively, the reflector can be an interior surface of a non-vehicle object that has an antenna for receiving GNSS signals. Such antenna systems can be used in any object that configured to receive and/or transmit GNSS signals.

GNSS antenna systems may maintain connections with satellites that are orbiting in the zenith and upper atmosphere or higher. However, a terrestrial GNSS antenna can be occluded by snow or ice. Under such conditions, the GNSS antenna may not be functional, or performance may be significantly reduced. Removing snow and/or ice can be useful to autonomous operation of a vehicle, such as a summon operation, or any other suitable advanced driver assistance features of the vehicle.

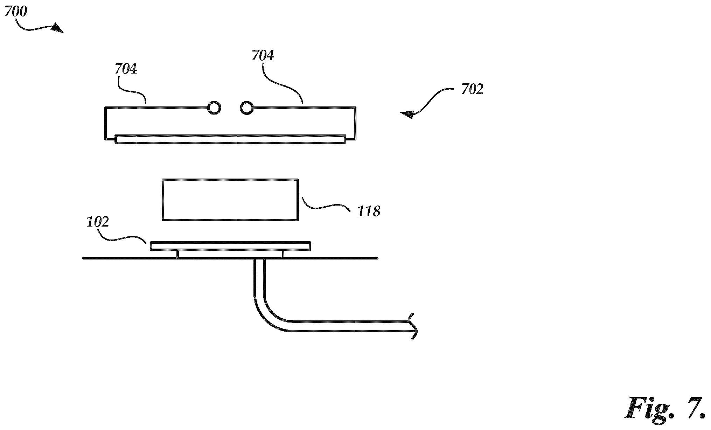

FIG. 7 illustrates an embodiment of an antenna system 700 including a heating element 702 The heating element 702 can include a set of leads 704 that provide energy to the heating element 702. The heating element 702 can illustratively be a capacitively coupled metallic element positioned in a glass layer over the antenna component 102, such that the antenna component 102 can transmit and receive signals from the GNSS system. As illustrated in FIG. 7, a spacer 118 can separate the heating element 702 from the antenna component 102 in some embodiments. The heating element 702 can melt snow and/or ice accumulation over the glass area that covers the antenna. The heating element can also serve as a parasitic element to enhance antenna gain. By capacitively coupling the antenna and the heating element, thermally sensitive electronics can be thermally isolated from the heating element.

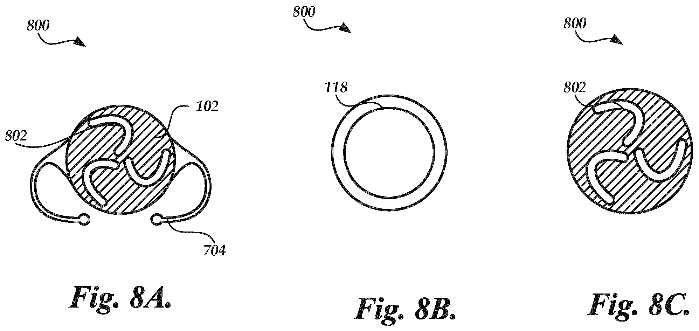

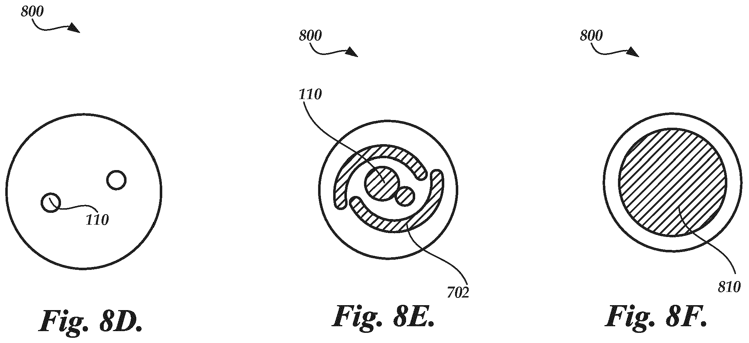

As illustrated in FIG. 7, the antenna system 700 can include a heating element 702, a spacer 118, and an antenna component 102. FIGS. 8A - 8F show several layers of an embodiment of the antenna system including a heating element. FIG. 8A shows an embodiment 900 of the heating element 902, which is embedded in the glass area over the antenna component 102. The heating element 902 can be patterned on glass, for example, using a conductive paste (e.g., a silver paste). The heating element 902 can be designed to replicate the pattern and/or design of the antenna and the antenna slots. The heating element 902 can be supplied with direct current (DC) or low frequency current to heat up, which in turn heats the glass above the antenna to melt the snow and/or ice accumulation. The heating element 902 can include one or more inductors 904 so the heating element 902 can be powered by direct current without interacting with radio frequency signals received by the antenna. The one or more inductors 904 can be patterned on glass. In some embodiments, the heating element can be covered to hide the traces from being viewed through the glass layer. As an example, a black ceramic frit can cover the heating element to hide traces of the heating element. The material covering the heating element 902 can be selected to have a minimal impact on thermal performance of the heating element.

FIG 8B corresponds to an embodiment in which a spacer 118 which separates the heating element 902 and the antenna component 102. Illustratively, the spacer 118 can correspond to any number of materials or lack of material, including, but not limited to air, a thermal sponge, or another material with a low thermal conductivity. The spacer can be flush mounted to the glass layer where the heating element is embedded. Illustratively, the spacer 118 can serve as a thermal barrier to ensure that heat from the heating element 702 (FIG. 7) is primarily used to heat the glass and melt the snow and/or ice accumulation. FIG. 8C shows an example an antenna component 102 located below the spacer 118. The antenna component 102 includes slots between conductive metal, such as copper. FIG. 8E illustrates an embodiment in which the antenna feeds shown. As shown in FIG. 8E, the antenna feeds can be included in the same layer as an LNA. FIG. 8E also illustrates a Fakra connection. A shielding structure 810 can be included in a layer below the antenna feeds and LNA, for example, as shown in FIG. 8F.

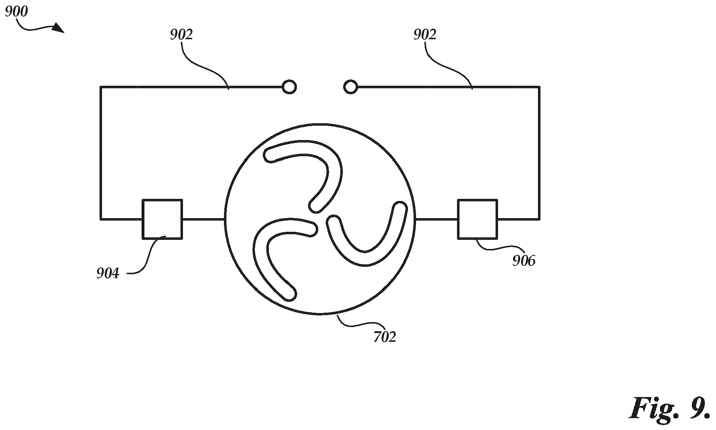

FIG. 9 is a diagram 900 that illustrates that an upper antenna trace 902 can receive DC power via inductors 904, 906 to heat the antenna trace. Each of the illustrated inductors 904, 906 can be a lumped element or a pattered inductor.

The antenna system 900 including a heating element can be located on a vehicle. The antenna system including a heating element can be located on the vehicle under an area which can be wiped by wipers. In an embodiment, the wipers can be activated to wipe away the snow and/or ice that has been heated by the heating element of the antenna system. The heating together with wiping can remove snow and/or ice within about 200 seconds or less.

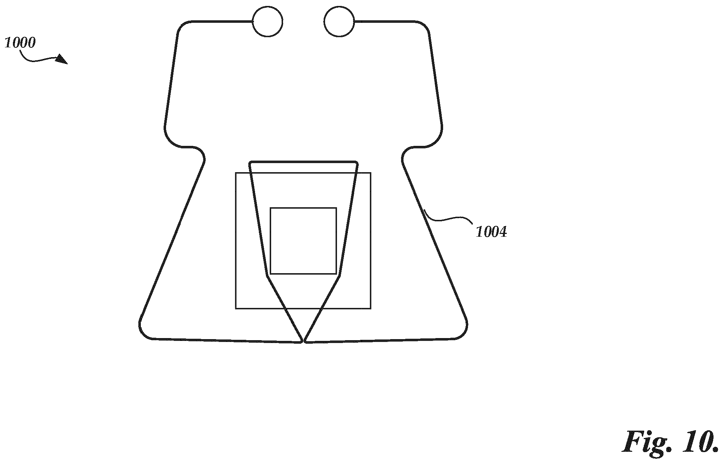

In certain embodiments, the heating element 1000 can have a heater grid pattern 1002 as illustrated in FIG. 10. As illustrated, the heater grid pattern 1002 can be made of a conductive material in the glass above the antenna which can be heated by having a current run through the heating element. The heater grid pattern 1002 is symmetric about a line bisecting the antenna component 102 and has a relatively wide opening over the antenna component as illustrated in FIG. 10. With such an opening, the antenna can be free from the heater grid pattern and the heater can have limited impact on the axial ratio of the antenna. Heater grid patterns with narrower openings and/or more overlap with the antenna can degrade axial ratio of the antenna more than the heater grid pattern shown in FIG. 10.

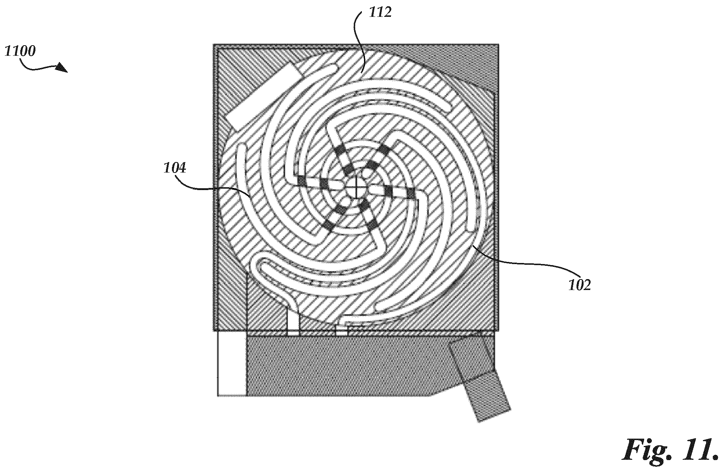

Fig. 11 illustrates an embodiment of an integrated antenna system as described herein. Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments.

Although the disclosure and examples have been described with reference to the accompanying drawings, various changes and modifications will become apparent to those skilled in the art. While certain embodiments have been described, these embodiments have been presented by way of example only. The invention is defined by the independent claim. Further embodiments are given by the dependent claims.

## Claims

1. An antenna system comprising:
a printed circuit board (102), the printed circuit board including a low noise amplifier (506) and at least one diplexer (504) configured to filter two different signal frequencies;
a multi-band antenna component configured to receive at least one signal comprising:
a plurality of slots (104) in the printed circuit board (102) configured to receive the at least one signal, wherein at least a first portion (105) of individual slots of the plurality of slots extends radially outward from a center of the printed circuit board, wherein the first portions of the individual slots of the plurality of slots are configured radially equidistant from each other relative to the printed circuit board, wherein at least a second portion (107) of the individual slots of the plurality of slots forms a spiral around the center of the printed circuit board;
at least two feeds (110) configured to receive the at least one signal from the plurality of slots (104), wherein the two feeds connect to each of the first portions (105) of the plurality of slots in the printed circuit board (102), wherein the two feeds are connected to the low noise amplifier (506) via different respective ports of the diplexer (504), and wherein the diplexer (504) is configured to filter signals from the two feeds and to combine the filtered signals at a port electrically connected to the low noise amplifier (506); and
a reflector (112) configured to reflect signals in-phase with the at least one signal for reception by the multi-band antenna component.

2. The antenna system of Claim 1, wherein the two feeds (110) are configured to connect to the plurality of slots (104) such that the at least one signal received by each of the two feeds is received in-phase from each slot of the plurality of slots such that the plurality of slots are configured as an array for receiving the at least one signal.

3. The antenna system of Claim 1, wherein the plurality of slots (104) is configured to receive global navigation satellite system signals.

4. The antenna system of Claim 3, wherein the global navigation satellite system signals have frequency ranges of 1559 MHz to 1610 MHz, 1215 MHz to 1254 MHz, and 1164 MHz to 1214 MHz.

5. The antenna system of Claim 1, wherein the reflector (112) is located relative to a rear surface of the antenna component in relation to a source of the at least one signal.

6. The antenna system of Claim 5, wherein the reflector (112) is a metal plate connected to the printed circuit board (102) or a metallized surface.

7. The antenna system of Claim 1, wherein the antenna system is configured to be integrated into a beauty cover (608) in a rear-view mirror assembly (600) of a vehicle.

8. The antenna system of Claim 7, wherein the reflector (112) is located between the printed circuit board (102) and the beauty cover (608).

9. The antenna system of Claim 1, wherein the reflector (112) is configured to be in-plane with the antenna component.

10. The antenna system of Claim 1, wherein the reflector (112) is an artificial magnetic conductor ground plane.

11. The antenna system of Claim 1, further comprising a heating element (702), the heating element comprising a metallic element in a glass layer, wherein the metallic element is capacitively coupled with the multi-band antenna component.

12. The antenna system of Claim 1, further comprising a filter configured to prevent signals from crossing between the two feeds (110).

13. The antenna system of Claim 1, further comprising:
a heating element (702) integrated into a surface between the antenna component and a source of the at least one signal, wherein the heating element is configured to heat a surface adjacent to the antenna component.

14. The antenna system of Claim 1, wherein the reflector (112) is configured to be in-plane with the antenna component, and wherein the reflector is integrated into the printed circuit board (102).

15. The antenna system of Claim 13, wherein the heating element (702) comprises a metallic element capacitively coupled with the multi-band antenna component, the metallic element replicating a pattern of the plurality of slots (104).

## Patentansprüche

1. Antennensystem, das Folgendes aufweist:
eine Leiterplatte (102), wobei die Leiterplatte einen rauscharmen Verstärker (506) und mindestens einen Diplexer (504) enthält, der dazu eingerichtet ist, zwei unterschiedliche Signalfrequenzen zu filtern;
eine Mehrband-Antennenkomponente, die dazu eingerichtet ist, mindestens ein Signal zu empfangen, und Folgendes aufweist:
eine Mehrzahl von Schlitzen (104) in der Leiterplatte (102), die dazu eingerichtet sind, das mindestens eine Signal zu empfangen, wobei sich mindestens ein erster Abschnitt (105) einzelner Schlitze der Mehrzahl von Schlitzen von einem Mittelpunkt der Leiterplatte radial nach außen erstreckt, wobei die ersten Abschnitte der einzelnen Schlitze der Mehrzahl von Schlitzen relativ zur Leiterplatte radial gleich weit voneinander entfernt
eingerichtet sind, wobei mindestens ein zweiter Abschnitt (107) der einzelnen Schlitze der Mehrzahl von Schlitzen eine Spirale um den Mittelpunkt der Leiterplatte herum bildet;
mindestens zwei Zuleitungen (110), die dazu eingerichtet sind, das mindestens eine Signal von der Mehrzahl von Schlitzen (104) zu empfangen, wobei die beiden Zuleitungen mit jedem der ersten Abschnitte (105) der Mehrzahl von Schlitzen in der Leiterplatte (102) verbunden sind, wobei die beiden Zuleitungen über unterschiedliche jeweilige Anschlüsse des Diplexers (504) mit dem rauscharmen Verstärker (506) verbunden sind, und wobei der Diplexer (504) dazu eingerichtet ist, Signale aus den beiden Zuleitungen zu filtern und die gefilterten Signale an einem Anschluss zusammenzuführen, der elektrisch mit dem rauscharmen Verstärker (506) verbunden ist; und
einen Reflektor (112), der dazu eingerichtet ist, Signale, die in Phase mit dem mindestens einen Signal sind, zum Empfang durch die Multiband-Antennenkomponente zu reflektieren.

2. Antennensystem nach Anspruch 1, wobei die beiden Zuleitungen (110) dazu eingerichtet sind, die Mehrzahl von Schlitzen (104) so zu verbinden, dass das mindestens eine Signal, das von jeder der beiden Zuleitungen empfangen wird, von jedem Schlitz der Mehrzahl von Schlitzen in Phase empfangen wird, so dass die Mehrzahl von Schlitzen als Anordnung zum Empfangen des mindestens einen Signals eingerichtet sind.

3. Antennensystem nach Anspruch 1, wobei die Mehrzahl von Schlitzen (104) dazu eingerichtet ist, Signale eines globalen Navigationssatellitensystems zu empfangen.

4. Antennensystem nach Anspruch 3, wobei die Signale des globalen Navigationssatellitensystems Frequenzbereiche von 1559 MHz bis 1610 MHz, 1215 MHz bis 1254 MHz und 1164 MHz bis 1214 MHz aufweisen.

5. Antennensystem nach Anspruch 1, wobei der Reflektor (112) in Bezug auf eine Quelle des mindestens einen Signals relativ zu einer Rückfläche der Antennenkomponente angeordnet ist.

6. Antennensystem nach Anspruch 5, wobei der Reflektor (112) eine mit der Leiterplatte (102) verbundene Metallplatte oder eine metallisierte Oberfläche ist.

7. Antennensystem nach Anspruch 1, wobei das Antennensystem dazu eingerichtet ist, in eine dekorative Verkleidung (608) einer Rückspiegelanordnung (600) eines Fahrzeugs integriert zu werden.

8. Antennensystem nach Anspruch 7, wobei der Reflektor (112) zwischen der Leiterplatte (102) und der dekorativen Verkleidung (608) angeordnet ist.

9. Antennensystem nach Anspruch 1, wobei der Reflektor (112) dazu eingerichtet ist, sich in derselben Ebene wie die Antennenkomponente zu befinden.

10. Antennensystem nach Anspruch 1, wobei der Reflektor (112) ein künstliche magnetische Leiter-Grundplatte ist.

11. Antennensystem nach Anspruch 1, das ferner ein Heizelement (702) aufweist, wobei das Heizelement ein metallisches Element in einer Glasschicht aufweist, wobei das metallische Element kapazitiv mit der Multiband-Antennenkomponente gekoppelt ist.

12. Antennensystem nach Anspruch 1, das ferner ein Filter aufweist, das dazu eingerichtet ist, das Übersprechen von Signalen zwischen den beiden Zuleitungen (110) zu verhindern.

13. Antennensystem nach Anspruch 1, das ferner Folgendes aufweist:
ein Heizelement (702), das in eine Oberfläche zwischen der Antennenkomponente und einer Quelle des mindestens einen Signals integriert ist, wobei das Heizelement dazu eingerichtet ist, eine an die Antennenkomponente angrenzende Oberfläche zu erwärmen.

14. Antennensystem nach Anspruch 1, wobei der Reflektor (112) dazu eingerichtet ist, sich in derselben Ebene wie die Antennenkomponente zu befinden, und wobei der Reflektor in die Leiterplatte (102) integriert ist.

15. Antennensystem nach Anspruch 13, wobei das Heizelement (702) ein metallisches Element aufweist, das kapazitiv mit der Multiband-Antennenkomponente gekoppelt ist, wobei das metallische Element ein Muster der Mehrzahl von Schlitzen (104) nachbildet.

## Revendications

1. Un système d'antenne comprenant :
une carte de circuit imprimé (102), la carte de circuit imprimé comprenant un amplificateur à faible bruit (506) et au moins un diplexeur (504) configuré pour filtrer deux différentes fréquences de signal ;
un composant d'antenne multibande configuré pour recevoir au moins un signal comprenant :
une pluralité de fentes (104) dans la carte de circuit imprimé (102) configurées pour recevoir ledit au moins un signal, dans laquelle au moins une première portion (105) de fentes individuelles de la pluralité de fentes s'étend radialement vers l'extérieur à partir d'un centre de la carte de circuit imprimé, dans laquelle les premières portions des fentes individuelles de la pluralité de fentes sont configurées radialement à égale distance les unes des autres par rapport à la carte de circuit imprimé, dans laquelle au moins une seconde portion (107) des fentes individuelles de la pluralité de fentes forme une spirale autour du centre de la carte de circuit imprimé ;
au moins deux alimentations (110) configurées pour recevoir ledit au moins un signal provenant de la pluralité de fentes (104), dans lesquelles deux alimentations sont connectées à chacune des premières portions (105) de la pluralité de fentes dans la carte de circuit imprimé (102), dans lesquelles deux alimentations sont connectées à l'amplificateur à faible bruit (506) via différents ports respectifs du diplexeur (504), et lequel le diplexeur (504) est configuré pour filtrer les signaux provenant des deux alimentations et pour combiner les signaux filtrés à un port électriquement connecté à l'amplificateur à faible bruit (506) ; et
un réflecteur (112) configuré pour réfléchir des signaux en phase avec ledit au moins un signal pour la réception par le composant d'antenne multibande.

2. Système d'antenne selon la revendication 1, dans lequel les deux alimentations (110) sont configurées pour se connecter à la pluralité de fentes (104) de sorte que ledit au moins un signal reçu par chacune des deux alimentations est reçu en phase depuis chaque fente de la pluralité de fentes de sorte que la pluralité de fentes est configurée comme un réseau pour recevoir ledit au moins un signal.

3. Système d'antenne selon la revendication 1, dans lequel la pluralité de fentes (104) est configurée pour recevoir des signaux de système mondial de navigation par satellite.

4. Système d'antenne selon la revendication 3, dans lequel les signaux de système mondial de navigation par satellite ont des plages de fréquences de 1559 MHz à 1610 MHz, 1215 MHz à 1254 MHz, et 1164 MHz à 1214 MHz.

5. Système d'antenne selon la revendication 1, dans lequel le réflecteur (112) est situé par rapport à une surface arrière du composant d'antenne par rapport à une source dudit au moins un signal.

6. Système d'antenne selon la revendication 5, dans lequel le réflecteur (112) est une plaque métallique connectée à la carte de circuit imprimé (102) ou une surface métallisée.

7. Système d'antenne selon la revendication 1, dans lequel le système d'antenne est configuré pour être intégré dans un cache esthétique (608) dans un ensemble de rétroviseur (600) d'un véhicule.

8. Système d'antenne selon la revendication 7, dans lequel le réflecteur (112) est situé entre la carte de circuit imprimé (102) et le cache esthétique (608).

9. Système d'antenne selon la revendication 1, dans lequel le réflecteur (112) est configuré pour être dans le même plan que le composant d'antenne.

10. Système d'antenne selon la revendication 1, dans lequel le réflecteur (112) est un plan de masse conducteur magnétique artificiel.

11. Système d'antenne selon la revendication 1, comprenant en outre un élément chauffant (702), l'élément chauffant comprenant un élément métallique dans une couche de verre, dans lequel l'élément métallique est couplé de manière capacitive avec le composant d'antenne multibande.

12. Système d'antenne selon la revendication 1, comprenant en outre un filtre configuré pour empêcher les signaux de traverser entre les deux alimentations (110).

13. Système d'antenne selon la revendication 1, comprenant en outre :
un élément chauffant (702) intégré dans une surface entre le composant d'antenne et une source dudit au moins un signal, dans lequel l'élément chauffant est configuré pour chauffer une surface adjacente au composant d'antenne.

14. Système d'antenne selon la revendication 1, dans lequel le réflecteur (112) est configuré pour être dans le même plan que le composant d'antenne, et dans lequel le réflecteur est intégré dans la carte de circuit imprimé (102).

15. Système d'antenne selon la revendication 13, dans lequel l'élément chauffant (702) comprend un élément métallique couplé de manière capacitive avec le composant d'antenne multibande, lequel l'élément métallique reproduit un motif de la pluralité de fentes (104).
